Europäisches Patentamt

European Patent Office

Office européen des brevets

(19)

(11) Veröffentlichungsnummer: **0 273 235**
A2

(12) **EUROPÄISCHE PATENTANMELDUNG**

(21) Anmeldenummer: 87117981.8

(22) Anmeldetag: 04.12.87

(51) Int. Cl.4: **B64D 17/00** , B64D 17/62

(30) Priorität: 06.12.86 DE 3641790
06.12.86 DE 8632801 U

(43) Veröffentlichungstag der Anmeldung:
06.07.88 Patentblatt 88/27

(84) Benannte Vertragsstaaten:
AT BE CH DE ES FR GB GR IT LI LU NL SE

(71) Anmelder: Dolezalek, Friedrich, Dr.
Ettaler Strasse 24
D-8038 Gröbenzell(DE)

(72) Erfinder: Dolezalek, Friedrich, Dr.
Ettaler Strasse 24
D-8038 Gröbenzell(DE)

(74) Vertreter: Säger, Manfred, Dipl.-Ing.
Patentanwälte Dipl.-Ing. Otto Flügel Dipl.-Ing.
Manfred Säger Postfach 810540
Cosimastrasse 81
D-8000 München 81(DE)

(54) Gleitfallschirm.

(57) Aus flexiblem Werkstoff gebildeter, im Flug mit Stauluft aufblähberer, tragflächenartiger Gleitfallschirm.

Bei großen Anstellwinkeln, beim Bodenstart in der Verwendung als Hängegleiter sowie beim extremen Sackflug (engl. stall) wird bei den bekannten Gleitfallschirmen der Profilnasenbereich eingedrückt und so die Stauluftzufuhr behindert.

Beim erfindungsgemäßen Gleitfallschirm ist der Profilnasenbereich durch flächige oder stabartige Mittel versteift, die in Ebenen senkrecht zur Spannweitenrichtung angeordnet sind. Dadurch ist eine Stabilisierung der Profilnase und die ungehinderte Stauluftzufuhr ohne wesentliche Erhöhung von Packvolumen oder Gewicht auch bei hohen Anstellwinkeln erreichbar.

Damit ist ein Gleitfallschirm angegeben, welcher im extremen Sackflug wesentlich sicherer fliegbar und im Bodenstart als Hängegleiter leichter und schneller mit Stauluft füllbar ist.

Fig.4

## Gleitfallschirm

Die Erfindung bezieht sich auf einen Gleitfallschirm nach dem Oberbegriff des Anspruchs 1.

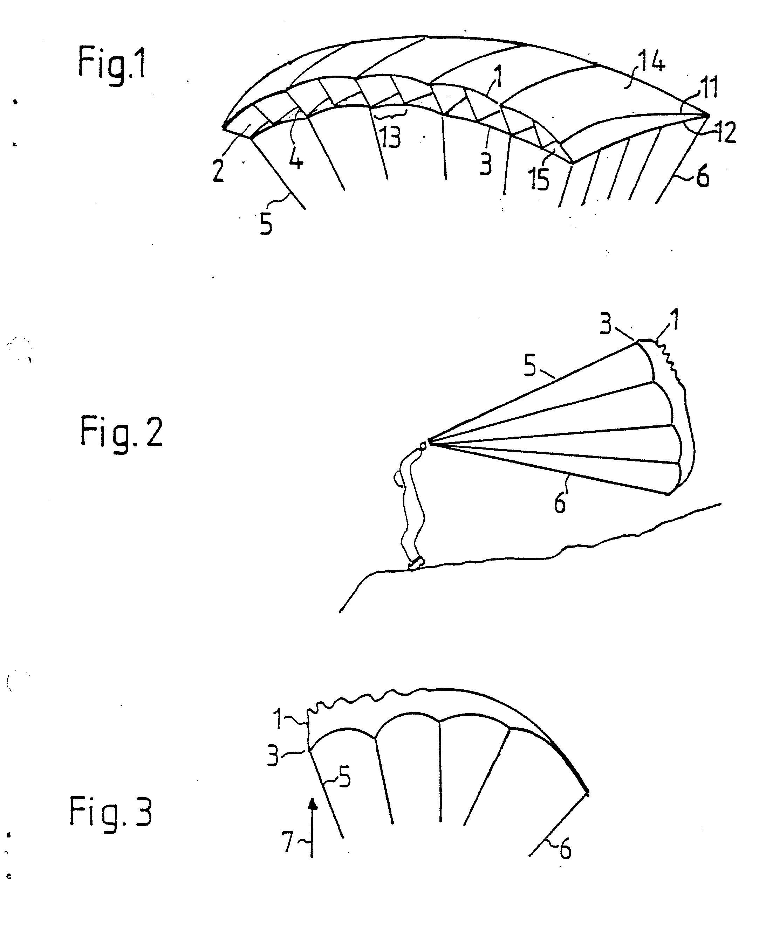

Gleitfallschirme der angesprochenen Gattung bestehen, wie in Fig. 1 gezeigt, aus einem im voll aufgeblähten Zustand tragflächenartigen Stoffgebilde, das aus einer oder mehreren oberen Bahnen (14) und unteren Bahnen (15) derart zusammengesetzt ist, daß eine oder mehrere Luftkammern (13) vorhanden sind. Der aufgeblähte Zustand wird im Gebrauch dadurch erreichbar, daß das an anderen Stellen ganz oder zumindest weitgehend verschlossene Stoffgebilde aus luftundurchlässigem Gewebe an der Profilvorderkante eine oder mehrere Stauluftöffnungen (2) aufweist, durch welche im Gebrauch anströmende Luft eindringen und im Innern einen Druck aufbauen kann, der das Stoffgebilde in die bestimmungsgemäße tragflächenartige Form bringt. Die Stauluftöffnungen (2) werden dabei so angeordnet, daß deren vordere Begrenzung (1) an der Profiloberseite (11) und deren hintere Begrenzung (3) an der Profilunterseite (12) liegt. Die Normale der durch den Rand der Stauluftöffnung (2) annähernd definierten Ebene weist dabei meist in einem Winkel von 45° zur Profilunterseite (12) nach unten vorn. Die Stauluftöffnungen können auch mit luftdurchlässigem Gewebe verschlossen sein. Im Gebrauch soll der Gleitfallschirm einen Auftrieb aufweisen, der den Widerstand mindestens um das zweifache übertrifft. Dazu ist es erforderlich , daß möglichst alle Längsschnitte durch den Gleitfallschirm senkrecht zur Spannweitenrichtung gut mit der aerodynamisch günstigen Tragflächenprofilform übereinstimmen. Diese Profilform wird gewöhnlich durch entsprechend geformte Rippen (4) aus Stoff vorgegeben. Diese sind im Gleitfallschirminneren vielfach mit Öffnungen zum seitlichen Druckausgleich versehen, oder sie bestehen aus durchlässigem Stoff.

Gleitfallschirme der in Anspruch 1 angesprochenen Gattung werden unter anderem dazu verwendet, Absprünge und daran anschließende Gleitflüge von Personen durchzuführen oder sie dienen als Hängegleiter zum Fußstart im Gebirge mit anschließendem Gleitflug. Es ist weiterhin möglich, Gleitfallschirme im Schleppbetrieb mit einer Winde oder mit einem Ultraleichtflugzeug auf Flughöhe zu bringen. Bei diesen Betriebsarten zeigen sich wesentliche Nachteile herkömmlicher Gleitfallschirme, die anhand der Fig. 2 und 3 erläutert werden:

Fig. 2 zeigt einen Gleitschirmpiloten beim Laufstart am Hang, der Gleitfallschirm ist im Schnitt dargestellt. Der Gleitfallschirm bildet im Nasenbereich Falten, die Stauluftöffnung ist teilweise verschlossen, sie liegt im Windschatten der Unterseite. Die Folge ist, daß namentlich bei geringem Wind die Füllung des Gleitfallschirms nur schwierig möglich ist.

Fig. 3 zeigt den Schnitt durch einen Gleitfallschirm im überzogenen Flugzustand, der hier durch Herabziehen der Bremsleinen (6) über das empfohlene Maß hinaus erzeugt ist. Die Anströmrichtung (7) ist von unten auf den Gleitfallschirm gerichtet, es ist nicht möglich, in dieser Fluglage die Füllung des Gleitfallschirms aufrecht zu erhalten, er entleert sich und die Stauluftöffnungen (2) können sich u.U. sogar schließen. Die Folge ist eine gefährlich hohe Sinkgeschwindigkeit.

Aus der Patentschrift DE 33 21 194 ist eine Vorrichtung bekannt, mit welcher die Aufrechterhaltung der Profilform insbesondere im Nasenbereich verbessert werden soll, insbesondere bei hohen Geschwindigkeiten (genannt werden 30 m/s). Hierzu dient ein in Spannweitenrichtung angeordneter elastischer Formkörper. Dieser Formkörper ist wegen seiner Masse und seines relativ zum Gleitfallschirm großen Packvolumens nachteilig.

Aus der deutschen Auslegeschrift 24 23 795 ist bekannt, daß die Füllung des Gleitfallschirms im Sackflug gemäß Fig. 3 der vorliegenden Anmeldung durch Öffnungen an der Profilunterseite verbessert werden kann . Wie die praktische Erfahrung gezeigt hat, wird das extreme Sackflugverhalten tatsächlich sicherer beherrschbar. Nachteilig ist jedoch der Stauluftverlust aus diesen Öffnungen beim Schnellflug mit kleinem Anstellwinkel sowie der zugehörige Anstieg des Widerstands. Dies macht sich durch eine Verschlechterung der Gleitflugleistung bemerkbar.

Aus der deutschen Offenlegungsschrift 25 30 210 ist ein Freiflügel bekannt, dessen gleitfallschirmartige Konstruktion um gasgefüllte Blasen im Inneren erweitert ist. Das Startverhalten und die Stabilität im Fluge wird hier durch eine Füllung mit Gasen, welche leichter als Luft sind, verbessert, indem diese eine Mindestfüllung und einen Mindestauftrieb sicherstellen. Nachteilig sind hier die hohen Kosten und der Zeitaufwand für die Füllung, außerdem erfordert das Mitführen der Blasen ein höheres Gewicht, das Packvolumen wird erheblich größer.

Schließlich sind Gleitfallschirme auf dem Markt verfügbar, welche aus Spinnaker-Polyamid-Gewebe bestehen. Dieses ist im Neuzustand zwar etwas steifer als das üblicherweise im Fallschirmbau verwendete Polyamidgewebe und vermag daher den geschilderten prinzipiellen Nachteile des Standes der Technik etwas entgegenzuwirken, sie bleiben aber nach wie vor bestehen. Der Vorteil der etwas größeren Steifigkeit bewirkt jedoch auch, daß die Nahtfestigkeit herabgesetzt wird, weil die Fäden des Gewebes der Nähnadel nicht ausweichen können und daher eine Perforation erfolgt. Eine hohe Reißfestigkeit ist aber für einen Fallschirmstoff Bedingung.

Es ist die Aufgabe dieser Erfindung, den geschilderten Stand der Technik zu verbessern. Insbesondere soll dabei erreicht werden, daß das Öffnungsverhalten beim Fußstart des Gleitfallschirms verbessert, d.h. beschleunigt wird. Ebenso soll die Füllung des Gleitfallschirms in Sackflugzuständen mit hohem Anstellwinkel (nahe 90°) sichergestellt werden. Diese Aufgaben sind zu lösen, ohne das Packvolumen und das Gewicht des Gleitfallschirms nennenswert zu erhöhen und ohne die Gleitflugeigenschaften zu beeinträchtigen.

Diese Aufgabe wird bei einer gattungsgemäßen Vorrichtung durch die kennzeichnenden Merkmale des Anspruchs 1 gelöst, und zwar dadurch, daß an der oder mindestens einer der Stauluftöffnungen (2) mindestens eine, sich im wesentlichen in einer Ebene senkrecht zur Spannweitenrichtung erstreckende, stab-oder flächenförmige, gegen Luftkräfte weitgehend stabile Versteifung (9) angeordnet ist. Dies bedeutet also, daß an den Stauluftöffnungen (2) Versteifungen (9) in einer Ebene angebracht sind, die mit jener der nächstgelegenen Rippe (4) identisch ist oder dazu parallel liegt. Dabei ist es möglich, daß der Gleitfallschirm nur eine einzige Stauluftöffnung (2) aufweist. Falls diese sich über einen wesentlichen Teil der Profilvorderkante erstreckt, müssen mehrere Versteifungen (9) angebracht werden, um zu verhindern, daß die vordere Begrenzung (1) der Stauluftöffnung (2) bei hohen Anstellwinkeln in den Windschatten der Profilunterseite (12) gerät und damit keine Stauluft aus der Anströmung schöpfen kann. Versuche haben auch gezeigt, daß es bei einem Gleitfallschirm nach Fig.1 ausreichend sein kann, nur die in der Mitte des Tragflügelgebildes liegenden Stauluftöffnungen zu versteifen. Es ist ebenso möglich, die Versteifungen (9) auf die mit Aufhängepunkten versehenen, tragenden Rippen (4) zu beschränken. Genauso ist es denkbar, die Versteifungen (9) auch außerhalb der durch die jeweils nächstgelegene Rippe (4) definierten Ebene, aber parallel zu dieser anzuordnen. Dies wird sich insbesondere dort empfehlen, wo der Gleitfallschirm nur über eine einzige Staukammer (13) verfügt. Die Versteifung (9) muß in ausreichendem Maße gegen Luftkräfte stabil sein, damit sie ihre Funktion, nämlich die Stauluftöffnung (2) beim Aufblähvorgang und bei übergroßen Anstellwinkeln gegen die Anströmung offen zu halten, erfüllen kann. Die Größenordnung der Luftkräfte liegt aber in diesem Fall nur bei einigen Newton.

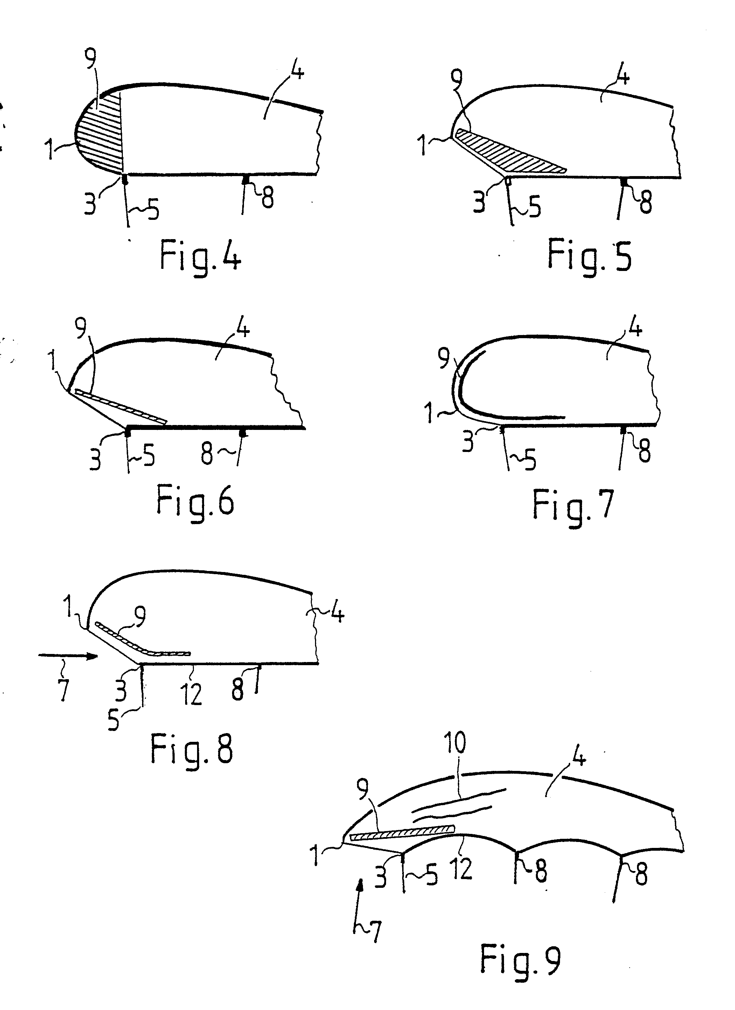

Vorteilhafte Weiterbildungen der Erfindung gehen aus den Unteransprüchen 2 bis 14 hervor, die mit Hilfe der Fig. 4 bis 9 erläutert werden. Alle Figuren 4 bis 9 zeigen Längsschnitte durch den Gleitfallschirm senkrecht zur Spannweitenrichtung. Dabei ist es besonders vorteilhaft, die Versteifungen (9) auf oder an den Rippen (4) zu befestigen wie hier gezeigt, dies ist jedoch nicht Bedingung. Sie können vielmehr auch an anderer Stelle entsprechend den in den Figuren beispielhaft gezeigten S Anordnungen befestigt werden. Fig. 1 zeigt eine die Profilnase der Rippe (4) ausfüllende, flächige Versteifung aus Segeltuch, Polyesterfolie oder einem anderen leichten, flächigen Material. Folien mit 0,2mm Dicke sowie polyesterfolienkaschiertes Polyestersegeltuch haben sich als besonders geeignet erwiesen. Die Versteifungen (9) können durch Aufnähen, Aufkleben leicht aufgebracht werden, sie wiegen insgesamt ca 200 g und lassen sich zusammen mit dem Fallschirm ohne vorherigen Ausbau verpacken, ohne dabei zu knicken. Es ist aber auch möglich, für die Versteifungen (9) je eine auf die Rippe (4) genähte Tasche oder eine sonst geeignet befestigte Tasche vorzusehen, sodaß die Versteifungen(9) bei Bedarf oder beim Aufrüsten vor dem Flug, einsetzbar sind.

Fig. 4 zeigt eine weitere vorteilhafte Ausgestaltung der Versteifung (9). Diese ist auf den unmittelbar an der von der vorderen Begrenzung (1) und der hinteren Begrenzung (3) der Stauluftöffnung (2) liegenden Bereich der Rippe (4) beschränkt und erstreckt sich in diesem Fall bis in die Mitte der Strecke zwischen den vordersten beiden Reihen der Aufhängepunkte (8) für die Fangleinen (5). Dies hat sich bei vielen Versuchen als besonders günstig erwiesen, denn die Profilunterseite (12) ist auch bei großen Anstellwinkeln und niedrigen Anströmgeschwindigkeiten unter Druck, sie ist daher als Widerlager für die Versteifung geeignet. Der Druckzustand äußert sich als Einbauchung der Profilunterseite (12), wie sie auf den Fig. 2, 3 und 9 zu sehen ist. Durch die mit hohem Anstellwinkel auftreffende Anströmung wird nämlich in den in Fig.2 und 3 gezeigten Situationen die vordere Begrenzung (1) der Stauluftöffnung (2) nach oben in die Wirbelzone des Windschattens der Profilunterkante (12) gedrückt. Ist aber eine Versteifung (9) nach Art der Fig. 5 bis 8 angebracht, so kann die vordere Begrenzung (1) nur insoweit nach oben/hinten gedrückt werden, als die Profilunterseite (12) zwischen den vordersten beiden Aufhängepunkten (8) nach unten nachgibt.

Die Fig. 6 zeigt die Verwendung eines Stabes als Versteifung (9). Dieser ist entweder in einer Tasche oder sonstig auf der Rippe (4) oder in einer dazu parallelen Richtung befestigt. Sowohl starre als auch biegsame Stäbe haben sich dabei als geeignet erwiesen. Dünne Hohlstäbe aus Kunststoff sind ebenso brauchbar wie glas-oder carbonfaserverstärkte Kunststoff-Voll-oder Hohlstäbe. Das Gewicht der Stäbe sollte je 10 g nicht überschreiten, was mit den genannten Materialien leicht zu erreichen ist. Insbesondere haben Testflüge und Starts mit Versteifungen (9) aus Angelrutenspitzen die besondere Eignung von sich konisch verjüngenden Stäben aus faserverstärkten Materialien erwiesen. Die Verjüngung ist deshalb vorteilhaft, weil dadurch eine besondere Biegsamkeit an dem sich verjüngenden Ende gegeben ist. Dies bewirkt, daß sich das Stabende nicht hart in den im Flug gespannten Fallschirmstoff bohrt, sondern weich federnd aufliegt. Dadurch wird einem vorzeitigen Verschleiß des Gleitfallschirms an seinen empfindlichsten Stellen vorgebeugt. Falls der Stab, wie in Fig. 6 gezeigt, befestigt ist, so hat es sich als geignet erwiesen, nur das hintere Ende konisch auslaufen zu lassen, da vorne eine höhere Biegesteifigkeit erforderlich ist. Ein doppelt konisch, dh an jedem Ende, auslaufender , biegsamer Stab eignet sich dagegen besser für die Anodnung nach Fig.7. Hier dient die Versteifung (9) zusätzlich zur Ausformung einer strömungsgünstigen Profilnase. Hohlstäbe als Versteifung (9) bieten den besonderen Vorteil, daß sie zum leichteren Transport oder zur Vermeidung von Beschädigungen am Gleitfallschirm beim Packen teleskopierbar herstellbar sind. Die Fig. 8 und 9 zeigen die Funktion einer weiteren, besonders vorteilhaften Ausbildung der Erfindung. Die Versteifung (9) ist hier als biegsamer Stab ausgebildet, der so auf der Rippe (4) oder so in einer Ebene parallel dazu befestigt ist,daß er im voll augeblähten Zustand des Gleitfallschirms durch den Zug der oberen Bahn (14) (Fig.1) auf die vordere Begrenzung (1) der Stauluftöffnung (2) nach oben mitgenommen und dadurch elastisch verformt wird. Fig. 8 zeigt diesen Zustand, die Anströmrichtung 7 ist praktisch parallel zu Profilunterkante (12), die Stauluftzufuhr ist maximal. Fig. 9 zeigt denselben Gleitfallschirm bei einer Anströmrichtung (7), die nahezu senkrecht zur Profilunterkante (12) steht. Infolge des geringeren Innendrucks nimmt der Stab hier seine Ruhelage ein, er verformt dabei die Profilform der Rippe (4), wodurch die Falten (10) entstehen. Während durch die bisher beschriebenen Ausgestaltungen der Erfindung nur die Größe und Stellung der Stauluftöffnung (2) konstant gehalten wurden und dadurch die erfindungsgemäße Aufgabe gelöst wurde, so wird nun mit der Ausgestaltung nach den Fig. 8 und 9 gezeigt, wie zusätzlich auch noch die Richtung der Normalen der durch den Rand der Stauluftöffnung (2) annähernd definierten Ebene mit der Richtung der Anströmung besser in Übereinstimmung bringbar ist. Da für die Schnelligkeit des Füllvorgangs nur die Normalkomponente der Anströmgeschwindigkeit in der von der Stauluftöffnung (2) aufgespannten Ebene wirksam ist ergibt sich so eine wesentliche Beschleunigung des Aufblähvorgangs. Außerdem kommt es bei geblähtem Gleitfallschirm auch bei hohen Anstellwinkeln nicht zu einem nichtumkehrbaren Verlust der Füllung, da die Stauluftöffnung praktisch immer auf die Anströmrichtung ausgerichtet ist. Selbstverständlich kann auch diese Versteifung (9) in einer Stofftasche herausnehmbar oder bleibend installiert sein.

Statt einer flächigen Versteifung (9) aus Stoff, Folie oder Stabmaterial kann diese auch aus einem flächigen, aufblasbaren Kissen, zB aus Weich-PVC gebildet sein. Derartige Gebilde haben im Versuch eine voll ausreichen de Biegesteifigkeit bewiesen, sie sind auch leicht genug und vermehren das Packvolumen nur unbedeutend. Ihr besonderer Vorteil ist, daß die Beschädigung des Fallschirmgewebes durch solche Kissen kaum zu befürchten ist.

Die mit der Erfindung erzielten Vorteile bestehen darin, daß ein Gleitfallschirm angegeben wird, welcher ohne nennenswerte Erhöhung des Packvolumens oder des Gewichts wesentlich sicherer zu fliegen ist und dessen Aufblasverhalten bei Verwendung als Hängegleiter wesentlich beschleunigt ist. Zusätzlich wird die Verwendung herkömmlicher Fallschirmstoffe auch für Hängegleiter-Gleitfallschirme ohne weiteres möglich.

Bezugszeichen

    1 Vordere Begrenzung der Stauluftöffnung
    2 Stauluftöffnung
    3 Hintere Begrenzung der Stauluftöffnung
    4 Rippe
    5 Fangleine
    6 Bremsleine
    7 Anströmrichtung
    8 Aufhängepunkt
    9 Versteifung
    10 Falten
    11 Profiloberseite
    12 Profilunterseite
    13 Luftkammer
    14 obere Bahn
    15 untere Bahn

Ansprüche

1. Aus flexiblem Werkstoff bestehender mit Stauluft im Flug aufblähbarer sich in Spannweitenrichtung erstreckender tragflächenartiger Gleitfallschirm mit mindestens einer Stauluftöffnung (2) an der in Flugrichtung vorne liegenden Vorderseite des Gleitfallschirms, wobei die Stauluftöffnung eine vordere - obere - Begrenzung (1) und eine hintere - untere - Begrenzung (3) in Form je einer Kante des Werkstoffs aufweist,

dadurch gekennzeichnet, daß an mindestens einer der Stauluftöffnungen (2) mindestens eine sich im wesentlichen in einer Ebene senkrecht zur Spannweitenrichtung erstreckende, gegen Luftkräfte weitgehend stabile Verstärkung (9) angeordnet ist.

2. Gleitfallschirm nach Anspruch 1,

dadurch gekennzeichnet, daß die Verstärkung die vordere Kante (1) in ihrer Lage hält.

3. Gleitfallschirm nach Anspruch 1,

dadurch gekennzeichnet, daß senkrecht zur Spannweitenrichtung zwei oder mehr zueinander parallel verlaufende Rippen (4) unter Bildung mehrerer Staukammern (13) vorgesehen sind, von denen jede eine Stauluftöffnung (2) aufweist und daß die Verstärkung an zumindest einer der Rippen (4) angeordnet ist sowie nahe bis zu der vorderen Begrenzung (1) reicht.

4. Gleitfallschirm nach Anspruch 1,

dadurch gekennzeichnet, daß sich die Versteifung (9) von der vorderen Begrenzung (1) der Stauluftöffnung (2) bis über die hintere Begrenzung (3) der Stauluftöffnung (2) hinaus derart erstreckt, daß mindestens ein Zehntel der Länge der Versteifung (9) hinter der vordersten Reihe der Aufhängerpunkte (8) der Fangleinen (5) liegt.

5. Gleitfallschirm nach Anspruch 1 oder 2,

dadurch gekennzeichnet, daß die Versteifung (9) aus einem textilen Flächengebilde besteht.

6. Gleitfallschirm nach Anspruch 1 oder 2,

dadurch gekennzeichnet, daß die Versteifung (9) aus einer Kunststoffolie besteht.

7. Gleitfallschirm nach Anspruch 1 oder 2,

dadurch gekennzeichnet, daß die Versteifung (9) aus einem aufblasbarem Kissen gebildet wird.

8. Gleitfallschirm nach Anspruch 1 oder 2,

dadurch gekennzeichnet, daß die Versteifung (9) durch einen dünnen Stab gebildet wird.

9. Gleitfallschirm nach Anspruch 6,

dadurch gekennzeichnet, daß der Stab biegsam ist.

10. Gleitfallschirm nach einem der Ansprüche 6 - 9,

dadurch gekennzeichnet, daß der Stab teleskopartig zusammenschiebbar ist.

11. Gleitfallschirm nach einem der Ansprüche 7 - 10,

dadurch gekennzeichnet, daß der Stab so angeordnet ist, daß er bei voll aufgeblähtem Zustand des Gleitfallschirms nach oben durchbiegbar ist und bei mangelndem Staudruck im Inneren des Gleitfallschirms eine Ruhelage einnimmt, bei welcher die vordere Begrenzung (1) der Stauluftöffnung (2) nach unten in Richtung auf die gedachte Verlängerung der Profilunterseite (12) nach vorn, verlagert ist.

12. Gleitfallschirm nach einem der Ansprüche 1 - 11,

dadurch gekennzeichnet, daß die Versteifung (9) an-und abmontierbar angebracht ist.

13. Gleitfallschirm nach Anspruch 12,

dadurch gekennzeichnet, daß die Versteifung (9) jeweils in einer Stoff-oder Kunststofftasche am Gleitfallschirm montiert ist.

14. Gleitfallschirm nach einem der Ansprüche 1 - 13,

dadurch gekennzeichnet, daß die Versteifung (9) so geformt oder so angebracht ist, daß die Ausbildung eines Tragflächenprofils unterstüzt wird.

Fig.1

Fig.2

Fig.3

Fig.4

Fig.5

Fig.6

Fig.7

Fig.8

Fig.9